# EUROPEAN PATENT APPLICATION

(11) **EP 4 783 394 A1**
(43) Date of publication of application: **29.07.2026**
(21) Application number: 26305067.6
(22) Date of filing: 15.01.2026
(51) Int. Cl.: H02J 1/02, H02J 7/34, H02M 7/06

(54) **CIRCUIT AND MOTOR RESISTANT TO VOLTAGE SAG**

(30) Priority: 24.01.2025 CN 202520174509 U
(71) Applicant: SCHNEIDER ELECTRIC INDUSTRIES SAS, 92500 Rueil-Malmaison (FR)
(72) Inventor: HUANG, Jie, SHANGHAI 201203 (CN); GUO, Yuchun, SHANGHAI 201203 (CN); LIU, Jingli, SHANGHAI 201203 (CN); ZHU, Qilei, SHANGHAI 201203 (CN); BI, Baoyun, SHANGHAI 201203 (CN); WU, Zuoren, SHANGHAI 201203 (CN); WANG, Fangfang, SHANGHAI 201203 (CN)
(74) Representative: Plasseraud IP

(57) **Abstract**

This utility model provides a circuit and motor for resisting voltage sag, the circuit comprises an energy storage module comprising a first capacitor, a second capacitor, a first diode, a second diode, and a third diode, wherein a first end of the first capacitor is connected to an energy exchange terminal, and a second end of the first capacitor is connected to a cathode of the first diode, and an anode of the first diode is grounded; a cathode of the second diode is connected to the energy exchange terminal of the circuit, and an anode of the second diode is connected to a first end of the second capacitor, and a second end of the second capacitor is grounded; the anode of the third diode is connected between the first capacitor and the first diode, and a cathode of the third diode is connected between the second diode and the second capacitor. The circuit and motor resistant to voltage sag according to this utility model can keep the motor running even when a voltage sag occurs. Furthermore, the circuit and motor are small in size, low in cost, and can improve the power factor of the system.

## Description

### CROSS-REFERENCE TO RELATED APPLICATION

This application is based on and claims priority to Chinese Patent Application No. 202520174509.1, filed on January 24, 2025 in the Chinese Patent Office, the contents of which being herein incorporated by reference in its entirety.

### TECHNICAL FIELD

This utility model relates to electronic circuits, and more particularly to a circuit and motor resistant to voltage sag.

### BACKGROUND

With the continuous development of modern industry, there are more and more loads at the back end of power system, and the load types are also diverse. Such large number and variety of loads may cause voltage sag to the voltage of power system. Voltage sag is one of the common voltage anomalies in power systems, also known as voltage fluctuation. Voltage sag typically means that the voltage of power system suddenly drops in a short time and then returns to normal level. Voltage sag may be caused by various factors, such as sudden start-up of high-power loads, power system faults, and motor starting. Voltage sag may lead to unstable equipment operation or even equipment shutdown.

In applications with motor loads, in order to ensure that it will not cause significant economic losses to users when short-term voltage sag occurs, users generally require the motor load to continue operating unaffected by the voltage sag, without experiencing getting stuck or stopping running. To address this challenge, solutions to resist voltage sag or voltage fluctuation become crucial.

Therefore, a solution is needed that can maintain motor operation even when voltage sag occurs in the power system.

### SUMMARY

According to one aspect of this utility model, a circuit for resisting voltage sag, comprises an energy storage module, the energy storage module comprising a first capacitor, a second capacitor, a first diode, a second diode, and a third diode, and wherein: a first end of the first capacitor is connected to an energy exchange terminal of the energy storage module, a second end of the first capacitor is connected to a cathode of the first diode, and an anode of the first diode is grounded; a cathode of the second diode is connected to the energy exchange terminal of the energy storage module, an anode of the second diode is connected to a first end of the second capacitor, and a second end of the second capacitor is grounded; an anode of the third diode is connected between the first capacitor and the first diode, and a cathode of the third diode is connected between the second diode and the second capacitor, and wherein the energy storage module is configured to: in response to the energy storage module being in a charging mode, a charging current input from the energy exchange terminal charges the first capacitor and the second capacitor through a charging path including the first capacitor, the third diode, and the second capacitor, in response to the energy storage module being in a discharging mode, the first capacitor outputs a first discharge current to the energy exchange terminal through a first discharging path including the first capacitor and the first diode, the second capacitor outputs a second discharge current to the energy exchange terminal through a second discharging path including the second capacitor and the second diode.

For example, the circuit according to an embodiment of this utility model, further comprises a boost converter module connected to the energy exchange terminal and the AC power supply, the boost converter module is configured to: convert AC power from the AC power supply into DC power, boost a voltage of the DC power, output DC power with a boosted voltage.

For example, the circuit according to an embodiment of this utility model, wherein the boost converter module is configured to: in response to a voltage of the AC power being greater than a first threshold voltage, output DC power with the boosted voltage, in response to the voltage of the AC power not being greater than the first threshold voltage, stop outputting DC power with the boosted voltage.

For example, the circuit according to an embodiment of this utility model, wherein the energy storage module is configured to: in response to the voltage of the AC power being greater than a first threshold voltage, the energy storage module is in a charging mode, in response to the voltage of the AC power not being greater than the first threshold voltage, the energy storage module is in a discharging mode.

For example, the circuit according to an embodiment of this utility model, further comprises a chopper module connected to the boost converter module and the energy storage module, the chopper module is configured to: receive DC power from the boost converter module or the energy storage module, reduce a voltage of the received DC power, output DC power with a reduced voltage.

For example, the circuit according to an embodiment of this utility model further comprises a control module connected to the chopper module, the control module is configured to receive DC power from the chopper module to control a switching element of a motor to turn on and off through a driver.

For example, the circuit according to an embodiment of this utility model, wherein the control module is configured to receive DC power from the energy storage module through the chopper module to control the switching element of the motor to turn on during the energy storage module is in the discharging mode.

For example, the circuit according to an embodiment of this utility model, further comprises a voltage acquisition module connected to the AC power supply and the control module, the voltage acquisition module is configured to: acquire a voltage of the AC power supply, output the voltage of the AC power supply to the control module.

For example, the circuit according to an embodiment of this utility model, wherein the control module is further configured to: in response to the voltage of the AC power supply not being greater than a second threshold voltage, turn off one or more of a group including an indicator component, a digital input component, a digital output component, and a backlight component included in a human-machine interface component powered by the control module.

According to one aspect of an embodiment of this utility model, a motor is provided, the motor comprises the above-described circuit for resisting voltage sag.

The circuit and the motor for resisting voltage sag according to embodiments of this utility model can reduce the voltage and capacity requirements of the energy storage capacitor, thereby reducing size and cost. Because the circuit for resisting voltage sag is small in size, it can be integrated into the motor, making full use of the available space in the motor. Furthermore, the circuit for resisting voltage sag can be accurately configured according to the motor into which it is integrated, without the need for users to separately calculate configuration parameters and conFig. external voltage sag components, reducing the complexity of users.

### BRIEF DESCRIPTION OF DRAWINGS

The above and other aspects, features, and advantages of specific embodiments of this utility model will become apparent from the following description taken in conjunction with the accompanying drawings, in which:
Fig. 1A illustrates a schematic diagram of an energy storage module of a circuit for resisting voltage sag according to an embodiment of this utility model.
Fig. 1B illustrates a schematic diagram of a charging process of the energy storage module according to an embodiment of this utility model.
Fig. 1C illustrates a schematic diagram of a discharging process of the energy storage module according to an embodiment of this utility model.
Fig. 2 illustrates an application scenario of a circuit for resisting voltage sag according to an embodiment of this utility model.
Fig. 3 illustrates a motor according to an embodiment of this utility model.

### DETAILED DESCRIPTION

Before proceeding with the following detailed description, it may be helpful to set forth definitions of certain words and phrases used throughout this utility model. The terms "include" and "comprise" and their derivatives mean including, but not limited to, including. The phrase "at least one of," when used with a list of items, means that different combinations of one or more of the listed items may be used, and only one item from the list may be required. For example, "at least one of A, B, and C" includes any of the following combinations: A, B, C, A and B, A and C, B and C, and A, B, and C.

Definitions for other specific words and phrases are provided throughout this utility model. Those of ordinary skill in the art should understand that in many, if not most instances, such definitions apply to prior and future uses of such defined words and phrases.

The various embodiments of the principles of this utility model in this patent application document are described below in conjunction with the accompanying drawings for illustration only and should not be interpreted as limiting the scope of this utility model in any way. It will be understood by those skilled in the art that the principles of this utility model may be implemented in any appropriately arranged system or device. In some cases, the actions described in this utility model may be performed in a different order and can still achieve the desired result. In addition, the process depicted in the accompanying drawings does not necessarily require the specific order shown or the sequential order to achieve the desired result. In a specific embodiment, multitasking and parallel processing may be advantageous.

The text and drawings are provided as examples only to aid understanding of this utility model. They should not be interpreted as limiting the scope of the claims appended hereto in any way. Throughout the drawings, the same reference numerals generally indicate the same elements. Although certain embodiments and examples have been provided, it will be clear to those skilled in the art based on the contents of this utility model that the illustrated embodiments and examples may be modified without departing from the scope of this utility model.

As described above, in applications with motor loads, users generally require the motor load to continue operating unaffected by short-term voltage sags. However, the control module of the motor may be unable to continue controlling the motor due to a voltage sag. For example, the control module may be unable to control the power switch of the motor to be continuously turned on through the driver due to voltage sag. Therefore, the motor may get stuck and stop running when the voltage drops temporarily because the power switch is turned off.

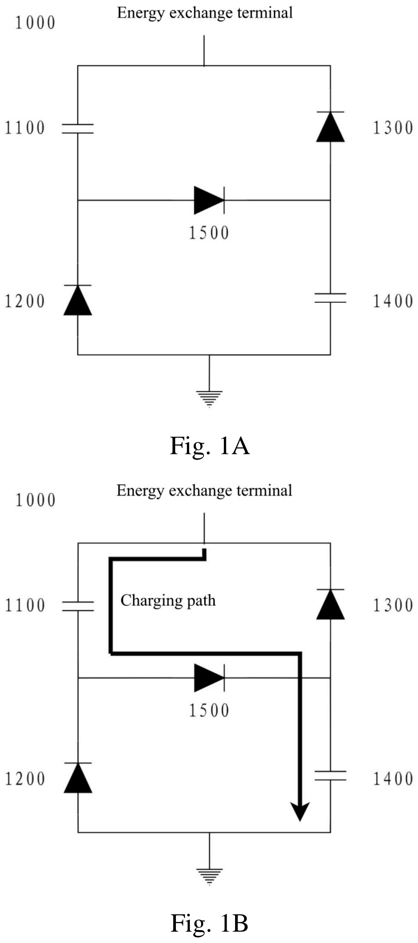

Fig. 1A illustrates a schematic diagram of an energy storage module of a circuit for resisting voltage sag according to an embodiment of this utility model.

As shown in Fig. 1A, the circuit for resisting voltage sag may include an energy storage module 1000. The energy storage module 1000 may include a first capacitor 1100, a second capacitor 1400, a first diode 1200, a second diode 1300, and a third diode 1500. The first capacitor 1100 and the second capacitor 1400 may be configured to store and release electrical energy. The first diode 1200, the second diode 1300, and the third diode 1500 may be configured to unidirectionally turn on the circuit.

The energy storage module 1000 may be connected to an energy exchange terminal and grounded. The energy storage module 1000 may be connected to a DC power supply and a DC load (e.g., a control module of a motor). According to an embodiment of this disclosure, the energy storage module 1000 may receive DC power from the DC power supply and output DC power to the DC load through the energy exchange terminal.

The first capacitor 1100 of the energy storage module 1000 may be connected in series with a first diode 1200. For example, the first end of the first capacitor 1100 may be connected to the energy exchange terminal of the energy storage module 1000, the second end of the first capacitor 1100 may be connected to the cathode of the first diode 1200, and the anode of the first diode 1200 may be grounded.

The cathode of the second diode 1300 of the energy storage module 1000 may be connected to the energy exchange terminal of the energy storage module 1000, the anode of the second diode 1300 may be connected to the first end of the second capacitor 1400, and the second end of the second capacitor 1400 may be grounded.

The anode of the third diode 1500 of the energy storage module 1000 may be connected between the first capacitor 1100 and the first diode 1200. For example, the anode of the third diode 1500 may be connected to the second end of the first capacitor 1100 and the cathode of the first diode 1200. The cathode of the third diode 1500 may be connected between the second diode 1300 and the second capacitor 1400. For example, the cathode of the third diode 1500 may be connected to the first end of the second capacitor 1400 and the anode of the second diode 1300.

Fig. 1B illustrates a schematic diagram of a charging process of the energy storage module according to an embodiment of this utility model.

The energy storage module 1000 shown in Fig. 1B may be in a charging mode. In response to the energy storage module 1000 being in a charging mode, the energy storage module 1000 may receive DC power from a DC power supply through an energy exchange terminal. Specifically, the energy storage module 1000 may receive charging current from the energy exchange terminal. The charging current may be a DC current. The charging current input from the energy exchange terminal may charge the first capacitor 1100 and the second capacitor 1400 through a charging path including the first capacitor 1100, the third diode 1500, and the second capacitor 1400. That is, the first capacitor 1100 and the second capacitor 1400 may store electrical energy in charging mode. The capacitance and voltage rating of the first capacitor 1100 and the second capacitor 1200 may be set according to the configuration of the motor.

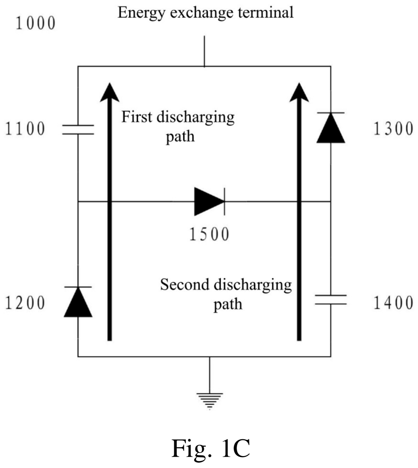

Fig. 1C illustrates a schematic diagram of a discharging process of the energy storage module according to an embodiment of this utility model.

The energy storage module 1000 shown in Fig. 1C may be in discharging mode. In response to the energy storage module 1000 being in discharging mode, the energy storage module 1000 may output DC power to a DC load through the energy exchange terminal. Specifically, in response to the energy storage module 1000 being in discharging mode, the first capacitor 1100 may output a first discharge current to the energy exchange terminal through a first discharging path including the first capacitor 1100 and the first diode 1200, and the second capacitor 1400 may output a second discharge current to the energy exchange terminal through a second discharging path including the second capacitor 1400 and the second diode 1300. The first charging current and second charging current may be DC currents. That is, the first capacitor 1100 and the second capacitor 1400 may release their stored electrical energy in discharging mode.

According to the energy storage module 1000 of this utility model, during charging, the first capacitor 1100 and the second capacitor 1200 may be connected in series. In this way, during charging, the voltage drop across each capacitor may be reduced, thereby lowering the voltage withstand requirement for the capacitors. Furthermore, the series-connected capacitors may improve ripple filtering, achieve an effect of smoothing the DC current, and also improve surge absorption capability. According to the energy storage module 1000 of this utility model, during discharging, the first capacitor 1100 and the second capacitor 1200 may be connected in parallel. Because parallel-connected capacitors increase the total capacitance, the capacitance requirement for individual capacitors is reduced. Since both the voltage rating and capacitance requirements for capacitors may be reduced, the size of the capacitors is reduced, lifespan of the capacitors is increased, and related costs of the capacitors are reduced. Furthermore, the energy storage module 1000 may function similarly to a valley fill circuit, thereby improving the power factor of the power system and preventing harmonic pollution to the power system.

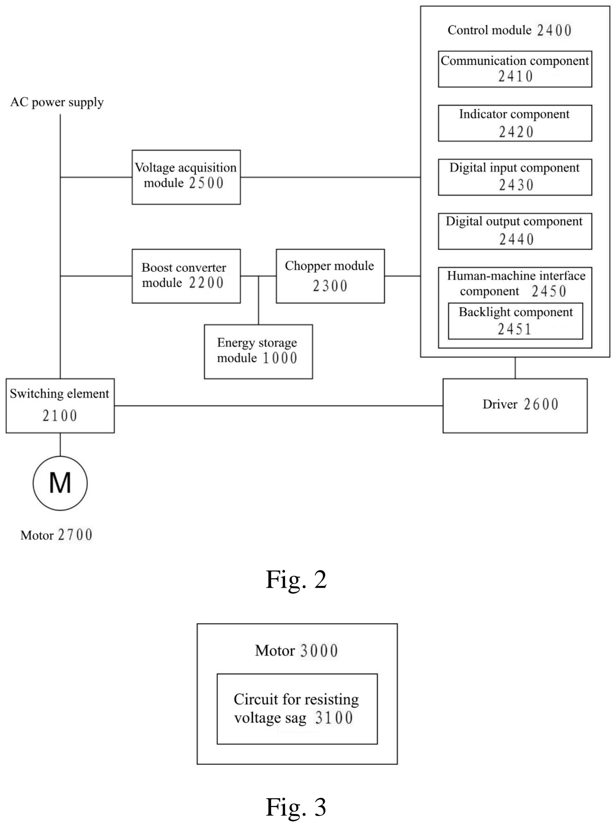

Fig. 2 illustrates an application scenario of a circuit for resisting voltage sag according to an embodiment of this utility model.

As shown in Fig. 2, the circuit for resisting voltage sag may include one or more of a group including a switching element 2100, a boost converter module 2200, an energy storage module 1000, a chopper module 2300, a control module 2400, a voltage acquisition module 2500, and a driver 2600.

The boost converter module 2200 may be connected to the energy exchange terminal of the energy storage module 1000 and an AC power supply (e.g., the power input port of the motor 2700). The boost converter module 2200 may receive AC power from the AC power supply. For example, the boost converter module 2200 may receive AC power which is the line voltage or phase voltage of a three-phase AC power supply. The conversion functions performed by the boost converter module 2200 may include rectification and boost functions. Specifically, the boost converter module 2200 may convert AC power from the AC power supply into DC power. The boost converter module 2200 may boost the voltage of DC power and output DC power with the boosted voltage. For example, the boost converter module 2200 may output DC power with the boosted voltage to the energy storage module 1000 and the chopper module 2300.

The boost converter module 2200 may perform a conversion function in response to the voltage of the AC power being greater than a first threshold voltage. For example, the boost converter module 2200 may output DC power with the boosted voltage in response to the voltage of the AC power being greater than the first threshold voltage. The first threshold voltage may be lower than the normal operating voltage of the AC power supply and may be 80V (or higher or lower), but this disclosure is not limited thereto.

The boost converter module 2200 may stop performing the conversion function in response to the voltage of the AC power not being greater than the first threshold voltage. For example, the boost converter module 2200 may stop outputting DC power with the boosted voltage in response to the voltage of the AC power not being greater than the first threshold voltage.

The energy storage module 1000 may be in charging mode or discharging mode depending on whether the boost converter module 2200 is performing a conversion function. According to an embodiment of this disclosure, the energy storage module 1000 may be in a charging mode in response to a voltage of the AC power being greater than a first threshold voltage. The energy storage module 1000 may be in a discharging mode in response to a voltage of the AC power not being greater than the first threshold voltage. In this way, DC power may be continuously output to the chopper module 2300 when a voltage sag occurs, thereby maintaining the normal operation of the control module 2400.

The chopper module 2300 may be connected to the boost converter module 2200 and the energy exchange terminal of the energy storage module 1000. The chopper module 2300 may be configured to receive DC power from either the boost converter module 2200 or the energy storage module 1000. The chopper module 2300 may reduce the voltage of the received DC power to a voltage adapted to the control module 2400 (e.g., 24V, 12V, 5V, and 3.3V, etc., but not limited thereto) and output the DC power with the reduced voltage to the control module 2400.

The control module 2400 may be connected to the chopper module 2300. The control module 2400 may include a microcontroller unit (MCU), a central processing unit (CPU), a digital signal processor (DSP), a single-chip microcomputer, or other processing units with data processing and/or program execution capabilities, for example, a field-programmable gate array (FPGA). The control module 2400 may include a general-purpose processor or a special-purpose processor and may perform the desired functions. Although not shown, the control module 2400 may include memory. The memory may include any combination of one or more computer program products, the memory may include various forms of computer-readable storage media, for example, volatile memory and/or non-volatile memory. Volatile memory may include, for example, random access memory (RAM) and/or cache. Non-volatile memory may include, for example, read-only memory (ROM), a hard disk, an erasable programmable read-only memory (EPROM), a portable compact disc read-only memory (CD-ROM), a USB storage device, flash memory, etc. One or more computer program modules may be stored on the computer-readable storage medium, and one or more computer program modules may be run to achieve voltage sag resistance. Various application programs and various data, as well as various data used and/or generated by the application programs, may also be stored in the computer-readable storage medium.

When the control module 2400 is powered on, it may control the switching element 2100 to turn on or off through the driver 2600, thereby controlling the motor 2700 to start or stop. When the control module 2400 is powered off, it may be unable to turn on the switching element 2100 through the driver 2600, thus the switching element 2100 is turned off, and the motor 2700 stops operating. The control module 2400 may be configured to receive DC power from the chopper module 2300 to control the switching element 2100 of the motor through the driver 2600. The switching element 2100 may include one or more devices of the group including MOSFETs, IGBTs, SiC, and GaN devices.

As described above, the chopper module 2300 may receive DC power from the boost converter module 2200 when the AC power supply is outputting normal AC power. The chopper module 2300 may receive DC power from the energy storage module 1000 when the AC power supply outputs AC power with a voltage sag or when the energy storage module 1000 is in discharging mode. In this way, the control module 2400 may still maintain its control function over the switching element 2100 even when a voltage sag occurs, thereby controlling the switching element 2100 to be continuously turned on during the voltage sag to ensure the continuous operation of the motor 2700.

Furthermore, the control module 2400 may include one or more of a group including a communication component 2410, an indicator component 2420, a digital input component 2430, a digital output component 2440, and a human-machine interface component 2450. Although the communication component 2410, indicator component 2420, digital input component 2430, digital output component 2440, and human-machine interface component 2450 are described as being included in the control module 2400 in Fig. 2, those skilled in the art will understand that communication component 2410, indicator component 2420, digital input component 2430, digital output component 2440, and human-machine interface component 2450 may be independent of the control module 2400. The communication component 2410, indicator component 2420, digital input component 2430, digital output component 2440, and human-machine interface component 2450 may be powered by the control module 2400.

The communication component 2410 may be configured to perform communication functions between the control module 2400 and a higher-level host. The indicator component 2420 may include indicator lights or other indication components to indicate to the user whether a relevant function is being performed correctly. The digital input component 2430 may include dry contacts, etc., and is configured to receive digital input for, for example, performing various test functions. The digital output component 2440 may be configured to output control signals to a relay to perform control functions. The human-machine interface component 2450 may display a graphical interface to a user to automate equipment. The human-machine interface component 2450 may include a backlight component 2451, such as an LCD, to display the graphical interface to the user with higher brightness.

The control module 2400 may acquire the voltage of the AC power supply through voltage acquisition module 2500. The voltage acquisition module 2500 may include one or more of a group comprising a resistor divider, a voltage transformer, and an operational amplifier sampling circuit. The voltage acquisition module 2500 may be connected to both the AC power supply and control module 2400. The voltage acquisition module 2500 may output the voltage of the AC power supply to control module 2400.

The control module 2400 may shut down one or more non-essential components powered by control module 2400 when a voltage sag occurs. Non-essential components may refer to components that have little or no impact on the control function of the control module 2400 and the switching element 2100 of the motor 2700. For example, in response to the voltage of the AC power supply not being greater than a second threshold voltage, the control module 2400 may shut down one or more of a group including indicator component 2420, digital input component 2430, digital output component 2440, and backlight component 2451 included in the human-machine interface component 2450. The second threshold voltage may be lower than the normal operating voltage of the AC power supply and may be equal to or different from the first threshold voltage. By shutting down unnecessary components, the power consumption of control module 2400 may be further reduced, thereby maintaining control over switching element 2100. The communication component 2410 may also be shut down when voltage sag is very severe (e.g., longer duration and larger voltage drop).

Although the circuit for resisting voltage sag according to this utility model has been described in the form of a motor implementation, those skilled in the art will understand that the circuit for resisting voltage sag according to this utility model may be integrated into or used in combination with any product requiring voltage sag resistance.

Fig. 3 illustrates a motor according to an embodiment of this utility model.

As shown in Fig. 3, the motor 3000 may include a circuit for resisting voltage sag 3100. The circuit for resisting voltage sag 3100 may be the circuit for resisting voltage sag described with reference to Figs. 1A-2. This description will not be repeated here.

The circuit and the motor for resisting voltage sag according to embodiments of this utility model can reduce the voltage requirements and capacity requirements of the energy storage capacitor, thereby reducing size and cost. Because the circuit for resisting voltage sag is small in size, it can be integrated into the motor, making full use of the available space in the motor. Furthermore, the circuit for resisting voltage sag can be accurately configured according to the motor into which it is integrated, without the need for users to separately calculate configuration parameters and conFig. external voltage sag components, reducing the complexity of users.

Although the disclosure has been described with exemplary embodiments, various changes and modifications can be suggested to those skilled in the art. The disclosure intends to cover such changes and modifications that fall within the scope of the appended claims.

Any description in this utility model should not be understood as implying that any specific element, step or function is an essential element that must be included in the scope of the claims. The scope of the patent subject matter is limited only by the claims.

## Claims

1. A circuit (3100) for resisting voltage sag, **characterized in that** it comprises an energy storage module (1000), the energy storage module (1000) comprising a first capacitor (1100), a second capacitor (1400), a first diode (1200), a second diode (1300), and a third diode (1500), and wherein:
a first end of the first capacitor (1100) is connected to an energy exchange terminal of the energy storage module (1000), a second end of the first capacitor (1100) is connected to a cathode of the first diode (1200), and an anode of the first diode (1200) is grounded;
a cathode of the second diode (1300) is connected to the energy exchange terminal of the energy storage module (1000), an anode of the second diode (1300) is connected to a first end of the second capacitor (1400), and a second end of the second capacitor (1400) is grounded;
an anode of the third diode (1500) is connected between the first capacitor (1100) and the first diode (1200), and a cathode of the third diode (1500) is connected between the second diode (1300) and the second capacitor (1400), and
wherein the energy storage module (1000) is configured to:
in response to the energy storage module (1000) being in a charging mode, a charging current input from the energy exchange terminal charges the first capacitor (1100) and the second capacitor (1400) through a charging path including the first capacitor (1100), the third diode (1500), and the second capacitor (1400),
in response to the energy storage module (1000) being in a discharging mode, the first capacitor (1100) outputs a first discharge current to the energy exchange terminal through a first discharging path (3100) including the first capacitor (1100) and the first diode (1200), the second capacitor (1400) outputs a second discharge current to the energy exchange terminal through a second discharging path (3100) including the second capacitor (1400) and the second diode (1300).

2. The circuit (3100) of claim 1, **characterized in that** it further comprises a boost converter module (2200) connected to the energy exchange terminal and the AC power supply, the boost converter module (2200) is configured to:
convert AC power from the AC power supply into DC power,
boost a voltage of the DC power,
output DC power with a boosted voltage.

3. The circuit (3100) of claim 2, **characterized in that** the boost converter module (2200) is configured to:
in response to a voltage of the AC power being greater than a first threshold voltage, output DC power with the boosted voltage,
in response to the voltage of the AC power not being greater than the first threshold voltage, stop outputting DC power with the boosted voltage.

4. The circuit (3100) of claim 3, **characterized in that** the energy storage module (1000) is configured to:
in response to the voltage of the AC power being greater than a first threshold voltage, the energy storage module (1000) is in a charging mode,
in response to the voltage of the AC power not being greater than the first threshold voltage, the energy storage module (1000) is in a discharging mode.

5. The circuit (3100) of claim 2, **characterized in that** it further comprises a chopper module (2300) connected to the boost converter module (2200) and the energy storage module (1000), the chopper module (2300) is configured to:
receive DC power from the boost converter module (2200) or the energy storage module (1000),
reduce a voltage of the received DC power,
output DC power with a reduced voltage.

6. The circuit (3100) of claim 5, **characterized in that** it further comprises a control module (2400) connected to the chopper module (2300), the control module (2400) is configured to receive DC power from the chopper module (2300) to control a switching element (2100) of a motor (2700, 3000) to turn on and off through a driver.

7. The circuit (3100) of claim 6, **characterized in that** the control module (2400) is configured to receive DC power from the energy storage module (1000) through the chopper module (2300) to control the switching element (2100) of the motor (2700, 3000) to turn on during the energy storage module (1000) is in the discharging mode.

8. The circuit (3100) of claim 6, **characterized in that** it further comprises a voltage acquisition module (2500) connected to the AC power supply and the control module (2400), the voltage acquisition module (2500) is configured to:
acquire a voltage of the AC power supply,
output the voltage of the AC power supply to the control module (2400).

9. The circuit (3100) of claim 6, **characterized in that** the control module (2400) is further configured to:
in response to the voltage of the AC power supply not being greater than a second threshold voltage, turn off one or more of a group including an indicator component (2420), a digital input component (2430), a digital output component (2440), and a backlight component (2451) included in a human-machine interface component (2450) powered by the control module (2400).

10. A motor (2700, 3000), **characterized in that** it comprises a circuit (3100) for resisting voltage sag according to any one of claims 1-9.
